# EUROPÄISCHE PATENTSCHRIFT

(11) **EP 1 862 057 B1**
(45) Veröffentlichungstag und Bekanntmachung des Hinweises auf die Patenterteilung: **02.12.2009**
(21) Anmeldenummer: 07008714.3
(22) Anmeldetag: 27.04.2007
(51) Int. Cl.: A01D 43/08, A01F 29/14

(54) **Vorsatzgerät zum Ernten von stängeligem Erntegut**
Attachment device for harvesting stalk crops
Attachement pour la récolte des plantes à tige

(30) Priorität: 30.05.2006 DE 102006025455
(43) Veröffentlichungstag der Anmeldung: 05.12.2007
(73) Patentinhaber: CLAAS Saulgau GmbH, 88348 Bad Saulgau (DE)
(72) Erfinder: Altepost, Helmut, 48477 Hörstel-Riesenbeck (DE); Rauch, Hans, 88348 Bad Saulgau (DE)

(56) Entgegenhaltungen:
- EP-A2- 0 986 947
- DE-A1- 19 544 182
- DE-U1- 29 702 902

## Beschreibung

Die Erfindung betrifft ein Vorsatzgerät für landwirtschaftliche Erntemaschinen, insbesondere für Feldhäcksler zum Mähen, Aufnehmen und Weiterführen eines stängelartigen Erntegutstroms, beispielsweise für Maispflanzen in den Einzugsspalt des Einzugsgehäuses gemäß dem Oberbegriff des unabhängigen Anspruchs 1.

### Stand der Technik

Bekannt sind diese Vorsatzgeräte insbesondere auch unter dem Begriff Maisgebisse. Diese sind dem Fachmann in verschiedenen Ausführungen bekannt. Die Aufgabe dieser Vorsatzgeräte für Feldhäcksler besteht darin, die stehenden Maispflanzen während der Vorwärtsfahrt abzumähen und die abgemähten Pflanzen dabei so weiter zu transportieren, dass sie in den Einzugsbereich bzw. in den Einzugsspalt des Einzugsgehäuses des Feldhäckslers gelangen. Bekannt sind Vorsatzgeräte mit mehreren quer zur Fahrt- und Arbeitsrichtung nebeneinander liegenden umlaufend angetriebenen Mäh- und Fördertrommeln mit übereinander liegenden mit Fördertaschen ausgestatteten scheibenförmigen Einzugselementen, denen im rückwärtigen Bereich zusätzlich Querförder- und Umlenkelemente zugeordnet sind.

Angetrieben werden die Mäh- und Fördertrommeln bzw. Mäh und Förderelemente vom Verbrennungsmotor des Trägerfahrzeugs ausgehend über einen mechanisch angetriebenen Antriebsstrang, wobei den Mäh- und Förderelementen ein sich quer zur Fahrtrichtung erstreckender Antriebsstrang vorgelagert ist, an dem die erforderlichen Antriebsmomente für die Mäh- und Förderelementen mittels Winkelgetrieben abgegriffen werden. Ein derartiger Antrieb ist beispielsweise aus der DE19544182 bekannt. Kommt es im laufenden Mäh- Ernteprozess zu Verstopfungen, so muss der Ernteprozess durch Anhalten der Fahrbewegung des Trägerfahrzeugs unterbrochen werden und die Verstopfung muss durch Reversieren des Antriebs beseitigt werden. Aus der DE 19653367 ist ein derartiger Reversierantrieb bekannt. Dabei wird der Antrieb der Einzugswalzen des Einzugsgehäuses des Häckslers und der des Vorsatzgerätes in seiner Drehrichtung reversiert und dabei vom Antrieb der Häckseltrommel abgekoppelt. Nachteilig dabei ist, dass dabei alle Mäh- und Förderelemente auch während des Reversierens angetrieben werden, und dabei das ganze Erntegut, welches sich im Vorsatzgerät und im Einzugsgehäuse und somit noch vor der Häckseltrommel befindet, zurück gefördert wird und als Haufwerk auf dem Feld zurück bleibt. Je größer dabei die Arbeitsbreite ist, um so größer ist das zurück bleibende Haufwerk.

### Aufgabenstellung

Die Aufgabe der Erfindung ist es, ein Vorsatzgerät der zuvor genannten Art vorzuschlagen, welches der Verstopfungsgefahr entgegenwirkt, und falls sich dennoch ein Verstopfungsvorgang anbahnt, diesen schnellstmöglich zu erkennen, um damit dem Ausmaß der Störung schnellstmöglich entgegen zu wirken um damit die vorgenannte Haufwerksbildung weitestgehend zu vermeiden oder zumindest die durch Reversiervorgänge hervorgerufenen Ernteverluste zu minimieren.

### Lösung der Aufgabe

Gelöst wird die Aufgabe der Erfindung mit den kennzeichnenden Merkmalen des unabhängigen Anspruchs 1. Weitere vorteilhafte Ausgestaltungen der Erfindung sind den abhängigen Ansprüchen, der Beschreibung und den Figurendarstellungen zu entnehmen.

Die Erfindung sieht dabei vor, dass der Antrieb jedes einzelnen Mäh- und Förderelements unabhängig von den übrigen. Mäh- und Förderelementen vom Führerstand aus der Kabine zu- oder abschaltbar oder reversierbar ist. Dabei können den Mäh- und Förderelementen entweder separate Schaltkupplungen zugeordnet sein, die den Antrieb für das jeweilige Mäh- und Förderelemente mit dem Hauptantriebsstrang herstellen oder unterbrechen oder die Drehrichtungsumkehr herbeiführen, oder aber es kann auch jedem Förderelement ein eigener Antriebsmotor zugeordnet sein, der so angesteuert werden kann, das ebenfalls das jeweilige Mäh- und Förderelemente angetrieben, außer Betrieb gesetzt oder reversiert werden kann.

Dabei können die Schaltvorgänge auch von einer zentralen Steuereinheit des Trägerfahrzeugs aus nach einem oder mehreren vorwählbaren und hinterlegten Algorithmen erfolgen oder auch manuell vom Fahrer des Trägerfahrzeugs individuell und selektiv ausgelöst werden.

Dabei können beispielsweise gerade beim Reversieren auch gezielt nur die Mäh- und Förderscheiben angesteuert werden, die von der Verstopfung tatsächlich betroffen sind, so dass auch nur das Erntegut rückwärts gefördert wird, welches die Verstopfung verursacht hat. In dem Programmspeicher eines Mikroprozessors können dabei auch verschiedene Algorithmen vor Reversiervorgängen hinterlegt werden, beispielsweise die, dass einzelne Mäh- und Förderscheiben für sich allein genommen unabhängig voneinander ansteuerbar sind oder auch durch Gruppenbildung zwei benachbarte Mäh- und Förderscheiben ansteuerbar sind.

Diese Algorithmen können dann auch beispielsweise für die Hochlaufphase der Mäh- und Förderscheiben genutzt werden. Wahlweise kann dabei auch der Antrieb der Vorpresswalzen beim Reversieren mit einbezogen werden, oder wenn sich dieses als unnötig erweist, auch unterbleiben, in dem der Antrieb der Einzugs- und Presswalzen dann während des Reversierens abgeschaltet bleibt.

Vorteilhafterweise sind die Schaltkupplungen integraler Bestandteil des jeweiligen Abzweiggetriebes eines Mäh- und Förderelements und sie sind beispielsweise als mit Hilfsenergie betätigbare Schaltkupplungen, beispielsweise als Lamellenkupplung, ausgebildet. Aber auch andere Kupplungsausführungen, wie beispielsweise formschlüssig eingreifende und ausrückbare Klauenkupplungen sind durchaus für diesen Anwendungsfall vorgesehen.

Die Hilfsenergien können dabei elektrischer, hydraulischer oder auch pneumatischer Natur sein. Dabei können die Schaltkupplungen auch gleichzeitig als Überlastkupplungen ausgelegt sein, die bei Überlast beispielsweise den Fahrantrieb des Trägerfahrzeugs anhalten.

Sollte hingegen die Drehzahl eines Antriebselements der zugehörigen Mäh- und Förderscheiben bei Überlast auf einen vorgegebenen Schwellwert absinken, welcher messtechnisch erfasst wird, so wird dadurch ein Signal zum abschalten des betreffenden Antriebs der Mäh- und Förderscheiben erzeugt.

Die Erfindung sieht weiterhin vor, dass das Vorsatzgerät ein eigenes in sich geschlossenes Hydrauliksystem zum Antrieb der Mäh- und Förderscheiben aufweist, welches z.B. mit einer Zapfwelle des Trägerfahrzeugs antriebsseitig in Wirkverbindung steht. Besonders vorteilhaft ist dabei die Auslegung des Hydrauliksystems als lastabhängig geregeltes load-sensing - System im geschlossenen Kreislauf mit Druckabschneidung, welches in sich eine kostengünstige und funktionssichere Überlastsicherung beinhaltet. Auch ist dabei möglich, dass von einer Hydraulikpumpe mehrere in sich geschlossene Arbeitskreisläufe ausgehen, welches den Kostenaufwand reduziert. Das Hydraulische Antriebssystem kann dabei vorteilhafterweise ein druckgeregeltes und/oder Förderstrom geregeltes load-sensing System sein, welches besonders zum Energiesparen eingesetzt werden kann.

Die messtechnische Erfassung und Auswertung erfolgt aus dem Zusammenwirken von Drehzahl und Drehrichtungssensoren, die vorteilhafterweise mit den entsprechenden Antriebselementen direkt in Wirkverbindung stehen oder Teil dieser sind.

Die so detektierten Eingangsgrößen stellen somit wichtige Eingangsgrößen eines Jobrechners dar, der erfindungsgemäß Teil des Vorsatzgerätes ist und der vorteilhafter Weise in ein Bus-System, beispielsweise in einen ISO-Bus eingebunden ist Die weitere Ausgestaltung der Erfindung sieht vor, diesen Jobrechner über eine BUS-Verbindung auch mit der zentralen Steuerung des Trägerfahrzeugs zu verbinden und auch an dessen Betätigungs- und Überwachungseinrichtung anzukoppeln, so dass der Prozessablauf auch visualisiert werden kann.

Die Erfindung ist exemplarisch an dem nachfolgenden Ausführungsbeispiel dargestellt und beschrieben.

### Ausführungsbeispiel

Nähere Einzelheiten der Erfindung sind den nachfolgenden Figurendarstellungen und deren Beschreibungen zu entnehmen.

Es zeigen:
- Fig. 1: zeigt ein Vorsatzgerät nach der Erfindung in vereinfachten Darstellung in einer Draufsicht in Betriebsstellung
- Fig. 2: zeigt das Vorsatzgerät gemäß Fig.1 mit einem mechanischen Antriebsstrang nach der Erfindung
- Fig. 2a: zeigt einen vergrößerten Ausschnitt aus Fig.2
- Fig. 2b: zeigt den Antriebsstrang gemäß Fig. 2 in einer Reversiersituation
- Fig. 2c: zeigt einen vergrößerten Ausschnitt aus Fig.2b
- Fig. 3: zeigt das Vorsatzgerät gemäß Fig.1 mit einem weiteren mechanischen Antriebsstrang nach der Erfindung
- Fig. 3a: zeigt einen vergrößerten Ausschnitt aus Fig.3
- Fig. 3b: zeigt den Antriebsstrang gemäß Fig. 3 in einer Reversiersituation
- Fig. 3c: zeigt einen vergrößerten Ausschnitt aus Fig.3b
- Fig. 4: zeigt das Vorsatzgerät gemäß Fig.1 mit einem hydraulischen Antriebsstrang nach der Erfindung
- Fig. 5: zeigt einen vergrößerten Ausschnitt aus Fig.4

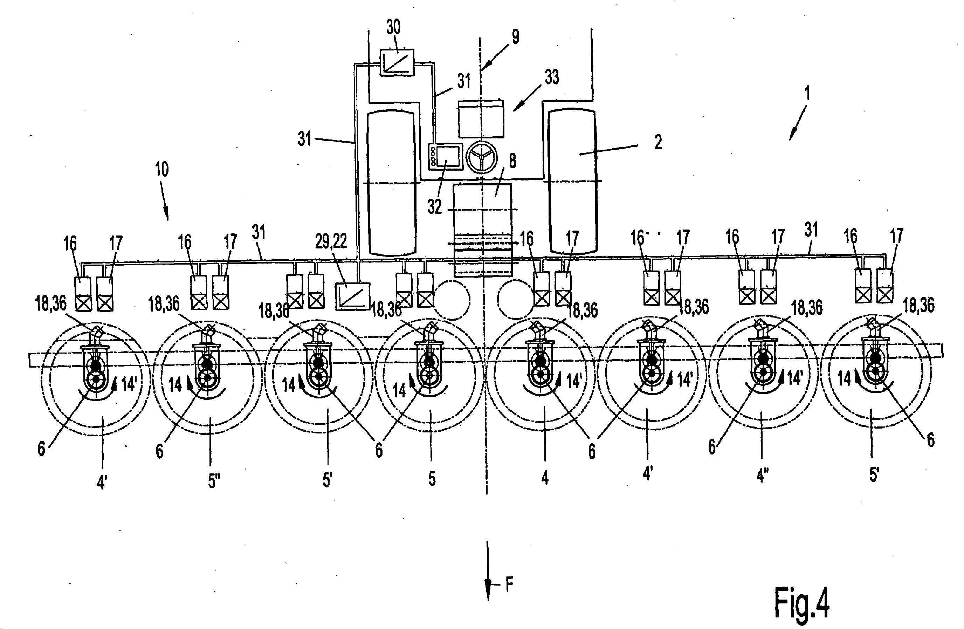

- Fig. 4: zeigt einen vereinfachten Hydraulikschaltplan für den hydraulischen Antriebsstrang nach der Erfindung

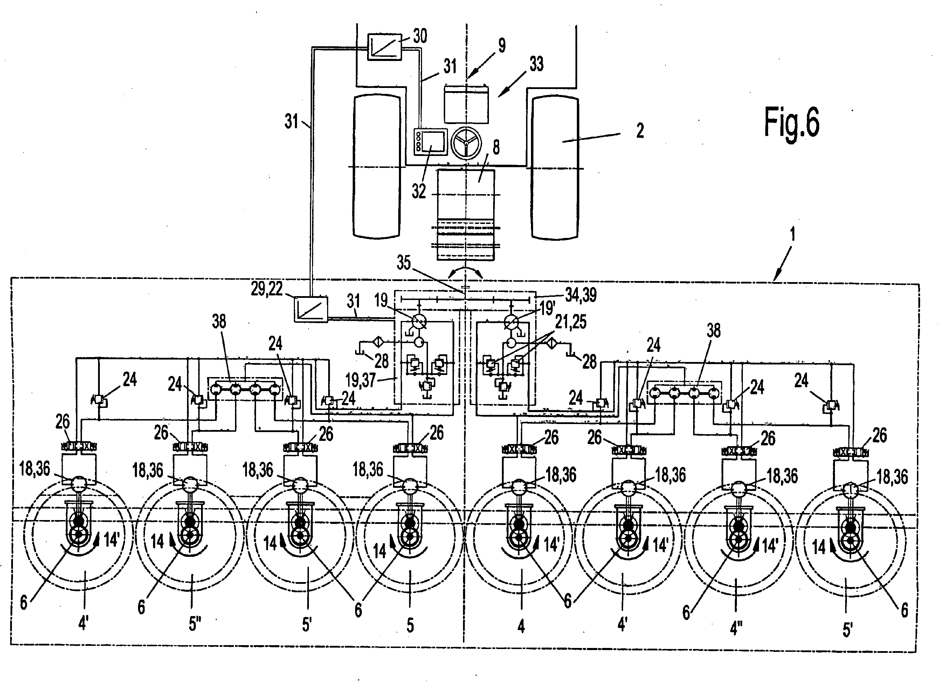

- Fig. 6: zeigt das komplette hydraulische Antriebssystem in einer vereinfachten Darstellung,

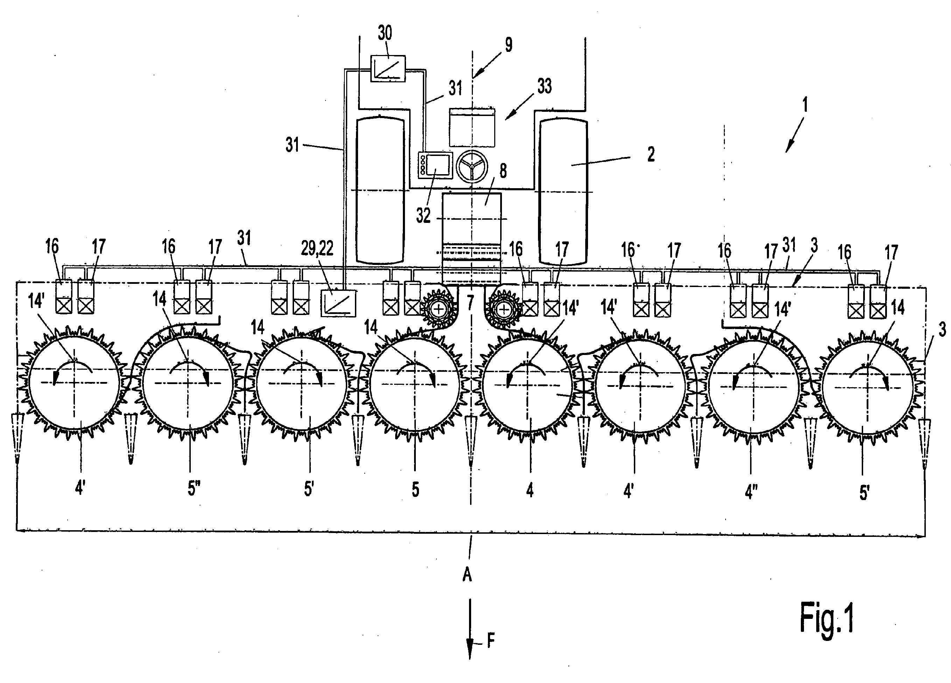

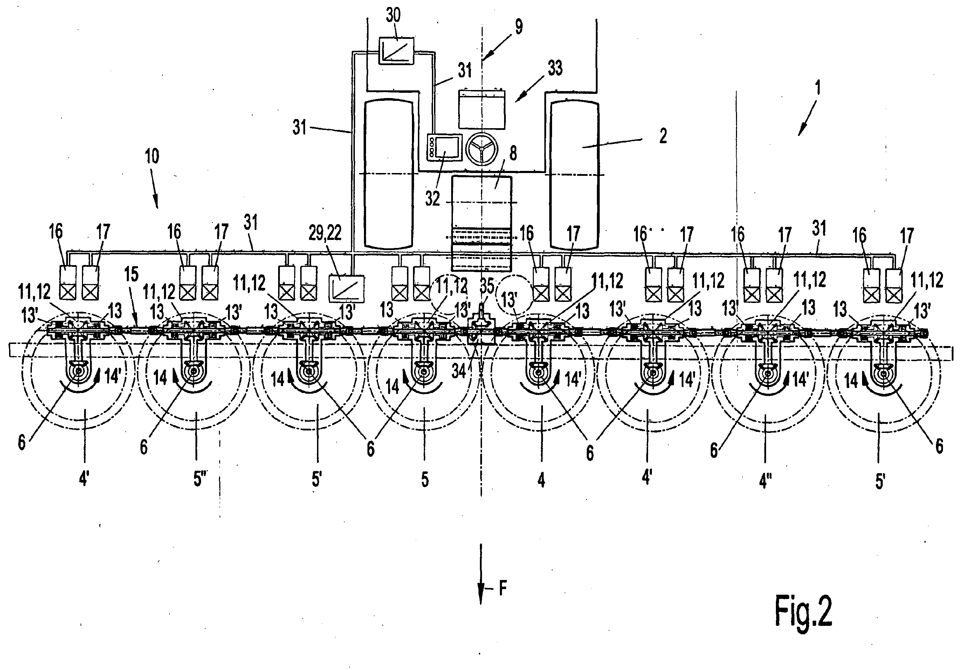

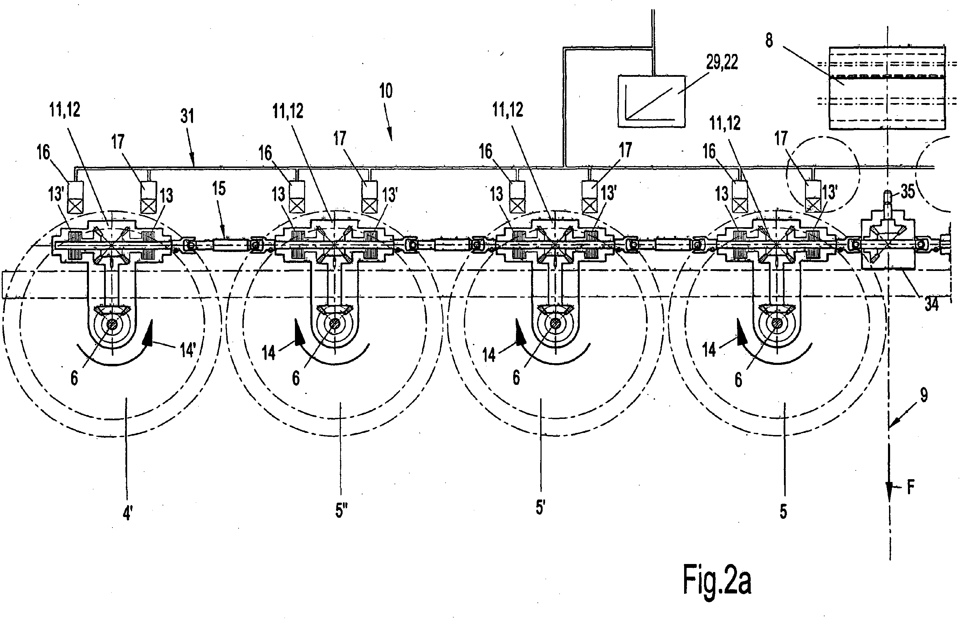

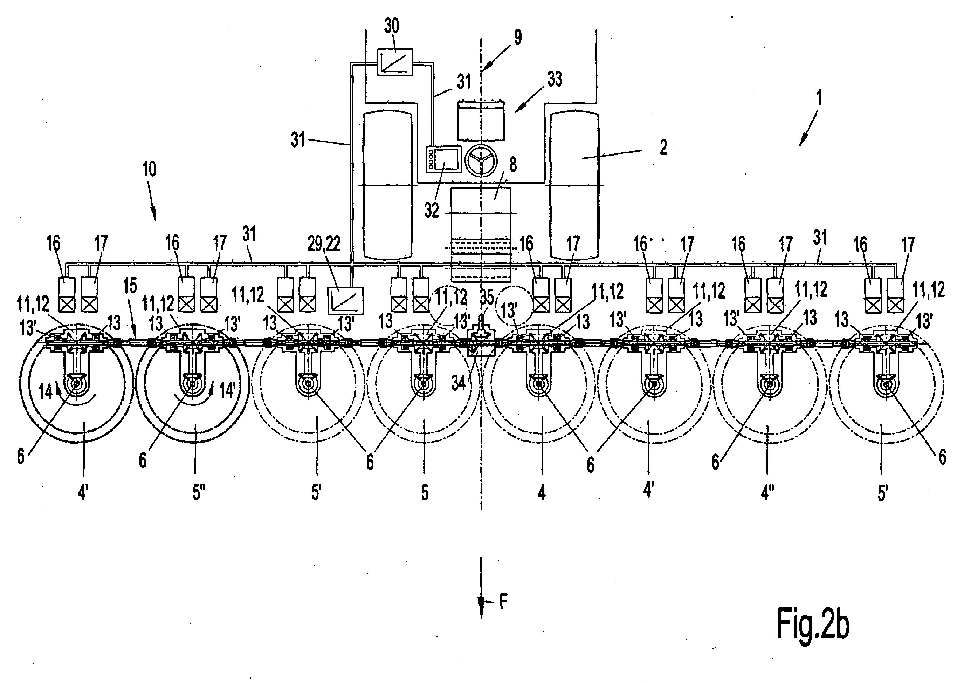

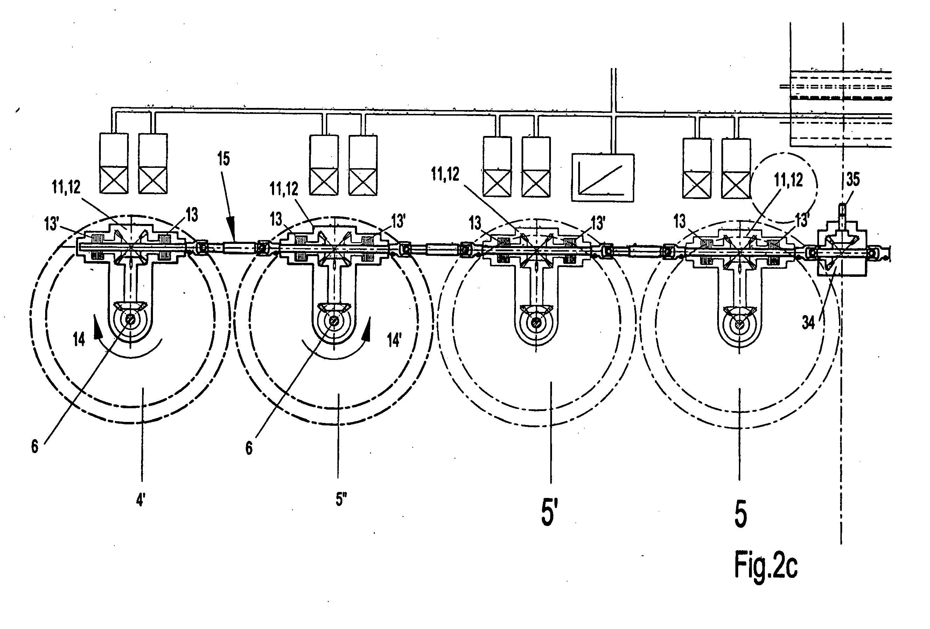

In Fig. 1 ist ein Vorsatzgerät 1 nach der Erfindung dargestellt und in Fig.2 ein vergrößerter Ausschnitt des Vorsatzgerätes gemäß Fig.1 mit einem mechanischen Hauptantriebsstrang 15, wobei jedem Mäh- und Förderelement 4,4',4" bzw. 5,5',5" ein separates Antriebselement 11 als Schaltgetriebe 12 mit je zwei Schaltkupplungen 13,13' zugeordnet ist. Dabei zeigt Fig. 2a der Klarheit halber einen vergrößerten Ausschnitt aus Fig.2. In Fig. 2b ist Antriebsstrang gemäß Fig. 2 in einer Reversiersituation dargestellt. Dabei zeigt Fig. 2c er Klarheit halber einen vergrößerten Ausschnitt aus Fig.2b.

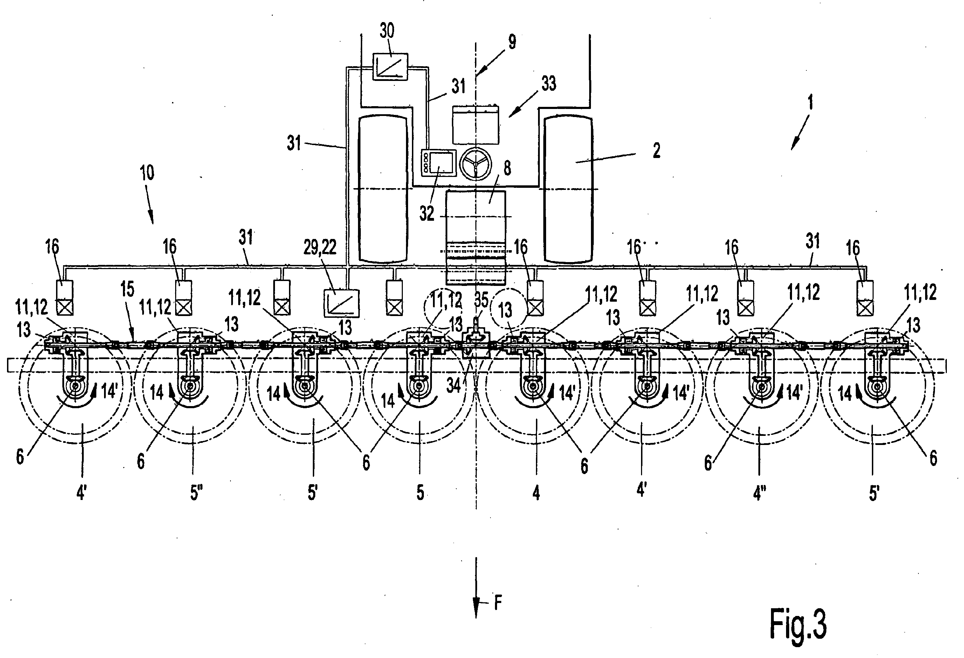

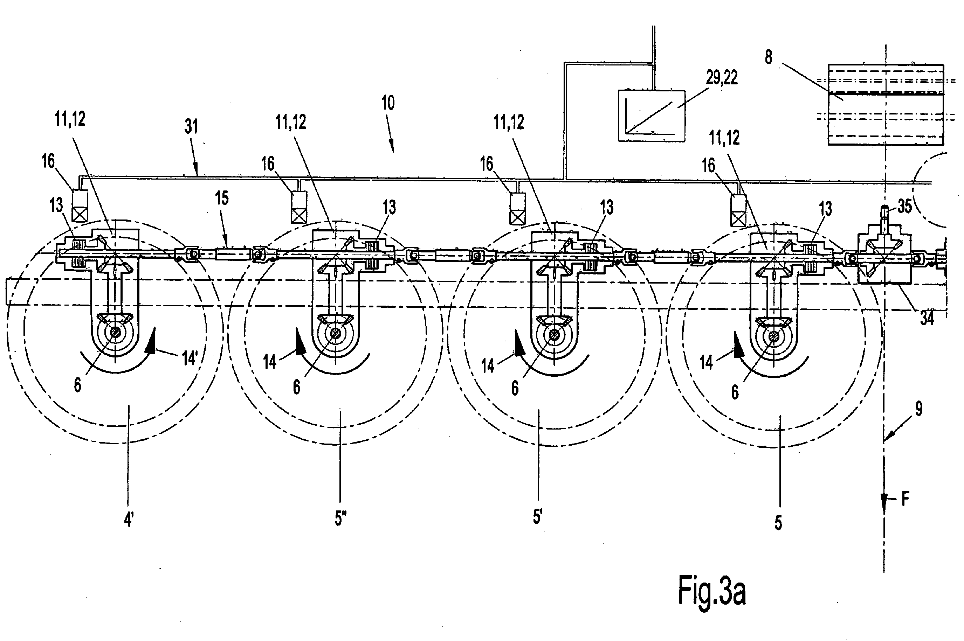

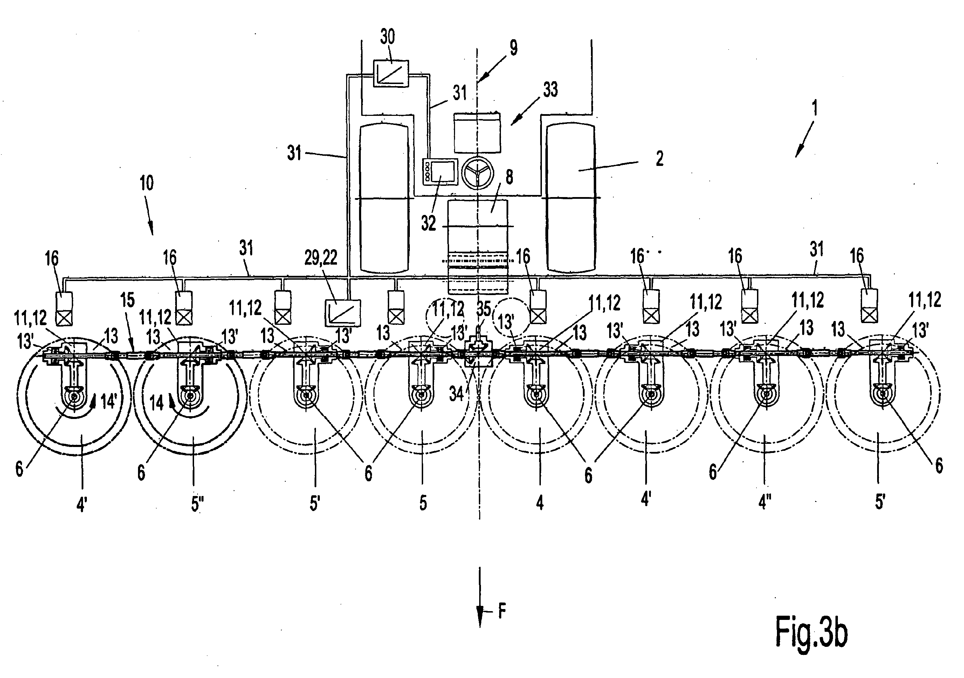

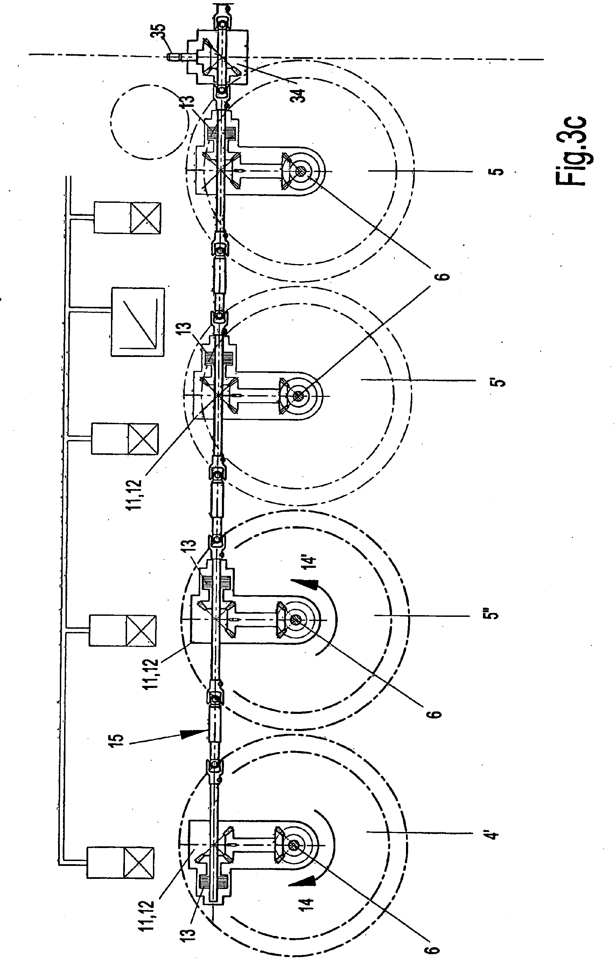

Fig.3 nimmt ebenfalls Rückbezug auf die Fig.1 jedoch in einer anderen erfinderischen Ausgestaltung des mechanischen Hauptantriebsstrang 15, wobei jedem Mäh- und Förderelement 4,4',4" bzw. 5,5',5" ein separates Antriebselement 11 als Schaltgetriebe 12 mit je einer Schaltkupplungen 13,13' zugeordnet ist. Dabei zeigt Fig. 3a der Klarheit halber einen vergrößerten Ausschnitt aus Fig.3. In Fig. 3b ist Antriebsstrang gemäß Fig. 3 in einer Reversiersituation dargestellt. Dabei zeigt Fig. 3c er Klarheit halber einen vergrößerten Ausschnitt aus Fig.3b.

Es handelt sich dabei um ein Maisgebisse in vereinfachter Darstellung in einer Draufsicht. Die Drehrichtungspfeile 14,14' zeigen die Drehrichtungen der Förderscheiben der Mäh- und Förderelemente 4,4',4" bzw. 5,5',5" im Mähbetrieb. Das Vorsatzgerät ist in bekannter Weise an ein Trägerfahrzeug 2, welches als selbstfahrender Feldhäcksler ausgebildet ist, vor dessen Einzugsgehäuse 8 mit seinem Einzugsspalt 7 angebaut.

Vorsatzgeräte dieser Art sind dem Fachmann als auswechselbare Einrichtungen und Maisgebisse bekannt und sie werden von einer Anschlusseinrichtung des Trägerfahrzeugs 2 aufgenommen und stehen mit diesem in Antriebsverbindung.

Das dargestellte Vorsatzgerät 1 umfasst als Ausführungsbeispiel acht Mäh- und Förderelemente 4;4',4",5,5',5", die sich an einem Maschinengestell 3 drehbar um Hochachsen 6,6' und gelagert in einem Winkelgetriebegehäuse abstützen und die sich im wesentlichen lediglich durch ihre Drehrichtungen 14,14' (14 im Urzeigersinn , 14' entgegen dem Urzeigersinn) unterscheiden. Die von den um Hochachsen angetriebenen Mäh- und Förderelemente 4;4',4",5,5',5" mähen die Maisstängel in der Nähe des Bodens ab, fangen sie in Fördertaschen der Mäh- und Einzugselemente ein und übergeben sie an nicht näher dargestellte aber dem Fachmann bekannte Querförderer, die sie dann in Förderkanälen zusammenführen und von diesen geführt dem Einzugsspalt 7 zuführen. Die Mäh- und Förderelemente 4;4',4",5,5',5" und ihre Drehrichtungen 14,14' sind lediglich beispielhaft dargestellt und es können je nach Ausführung und Arbeitsbreite A mehr oder weniger Mäh- und Förderelemente sein.

Erfindungsgemäß ist es nun möglich, jedes der Mäh- und Förderelemente 4;4',4",5,5',5" hinsichtlich seines Antriebs einzeln anzusteuern, d.h. diese separat umlaufend anzutreiben oder diese außer Betrieb zu setzen oder zu reversieren. Die Ansteuerung erfolgt vom Steuerstand 33 bzw. Fahrersitz aus der Fahrerkabine 33 heraus. Exemplarisch ist diese am Beispiel der Reversierung der beiden in Fahrtrichtung rechten äußeren Mäh- und Förderelemente 4',5" in den Fig.2b bzw. Fig.3b dargestellt, welches durch die dickeren Linien dieser beiden Mäh- und Förderelemente symbolisch dargestellt ist.
Alle übrigen Mäh- und Förderelemente 4',5" stehen dabei still, welches bedeutet, dass sie außer Betrieb gesetzt sind, wie auch die fehlenden Drehrichtungspfeile an diesen außer Betrieb gesetzten Mäh- und Förderelementen dieses symbolisch darstellen.
Hingegen haben sich die Drehrichtungen der beiden äußeren im Reversierzustand befindlichen Mäh- und Förderelemente im Vergleich zur Fig. 1 umgekehrt, welches dem Reversiervorgang entspricht. In beiden dargestellten Beispielen, sowohl in der Fig. 2b als auch in der Fig.3b bleibt der komplette Antriebsstrang 15 während des Reversierens eingeschaltet d.h. in Bewegung, welches durch die dickeren Linien des Antriebsstrangs gekennzeichnet ist.

Ermöglicht wird dieses dadurch, dass die Drehrichtung 14 oder 14' wenigstens eines Mäh- und Förderelements 4;4',4",5,5',5" unabhängig von den übrigen Mäh- und Förderelementen 4;4',4",5,5',5" des Vorsatzgerätes 1 veränderbar ist und somit auch, dass wenigstens ein Mäh- und Förderelement 4;4',4",5,5',5" unabhängig von den übrigen. Mäh- und Förderelementen 4;4',4",5,5',5" des Vorsatzgerätes (1) reversierbar und/oder außer Betrieb setzbar ist. Erfindungsgemäß ist aber auch vorgesehen, dass jedes der Mäh- und Förderelemente 4;4',4",5,5',5" selektiv im vorgenannten Sinne ansteuerbar ist Dabei ist vorgesehen, dass den Mäh- und Förderelementen 4;4',4",5,5',5' Antriebselemente 11 zugeordnet sind, durch deren Ansteuerung die Drehrichtungen 14,14' vom Fahrersitz des Trägerfahrzeugs 2 aus veränderbar sind. Jedem Mäh- und Förderelement 4;4',4",5,5',5" ist wenigstens ein Drehzahlsensor (16) und ein Drehrichtungssensor (17) zugeordnet

Eine Ausführungsform der Erfindung sieht dabei vor, dass in dem mechanischen Antriebsstrang 15, der im rückwärtigen Bereich 10 des Vorsatzgerätes 1 angeordnet ist, Antriebselemente als Schaltgetriebe (12) in Reihe angeordnet sind und die von diesem das erforderliche Antriebsdrehmoment für die Mäh- und Förderelemente 4;4',4",5,5',5" abgreifen. Als Schaltelemente sind beispielhaft die als Antriebselement 11 fungierenden Schaltkupplungen 13,13' dargestellt.

Somit werden die Schaltgetriebe 12 von dem quer zur Fahrt- und Arbeitsrichtung F verlaufender Hauptantriebsstrang 1, - welcher mit dem Antriebsmotor des Trägerfahrzeugs 2 in Antriebsverbindung steht, durchsetzt und die Mäh- und Förderelemente 4;4',4",5,5',5" sind damit antriebsseitig mit diesem gekoppelt.

Dadurch, dass die Schaltkupplungen 13,13' eines Schaltgetriebes 12 derart in Wechselwirkung zueinander stehen, dass sie durch die Art ihrer Beschaltung die Antriebsverbindung zu den Mäh- und Förderelementen 4;4',4",5,5',5" entweder schließen oder öffnen. Im Ausführungsbeispiel gemäß Fig.2 behält der Hauptantriebsstrang seine Drehrichtung auch im Falle des Reversierens bei. Die Drehrichtung der Förderscheibe des jeweiligen Mäh- und Förderelements wird bestimmt dadurch, welche der beiden Schaltkupplungen mit dem Hauptantriebsstrang in Antriebsverbindung steht und welche freigeschaltet ist. Sind hingegen beide Schaltkupplungen 13,13' eines Schaltgetriebes 12 freigeschaltet, so ist die Antriebsverbindung des betreffenden Mäh- und Förderelementes gänzlich unterbrochen und damit außer Betrieb gesetzt.

Im Ausführungsbeispiel Fig.3 beinhalte jedes Schaltgetriebe lediglich eine Schaltkupplung 13, wobei dieses Ausführung es erforderlich macht, dass zum Reversieren die Drehrichtung des Hauptantriebsstrangs umgekehrt d.h. ebenfalls reversiert wird, wie dieses bei bekannten Ausführungen des Hauptantriebsstrangs 15 bereits der Fall ist. Durch zu- und Abschalten der Schaltkupplungen 13 kann dann jede einzelne Antriebsverbindung zu den jeweiligen Mäh- und Förderscheiben hergestellt oder unterbrochen werden, welches es somit ermöglicht, die einzelnen Mäh- und Förderelemente selektiv zu- oder abzuschalten, und dieses sowohl im Normalbetrieb als auch im Reversierbetrieb.

Somit ist für jedes einzelne Mäh- und Förderelement 4;4',4",5,5',5" der Betriebszustand Normalbetrieb, Stillstand oder Reversierbetrieb ansteuerbar. Die Schaltkupplung 13,13' ist dabei integraler Bestandteil des Schaltgetriebes (12) und sie ist vorteilhafterweise als schaltbare Lamellenkupplung ausgebildet. Die Getriebe selber sind in den Ausführungsbeispielen als Kegelradgetriebe dargestellt, welches nur als beispielhaft anzusehen ist. Genauso kann es sich dabei um andere Ausführungsformen von Schaltgetrieben handeln, wie diese in der Antriebstechnik vielfältig bekannt sind.

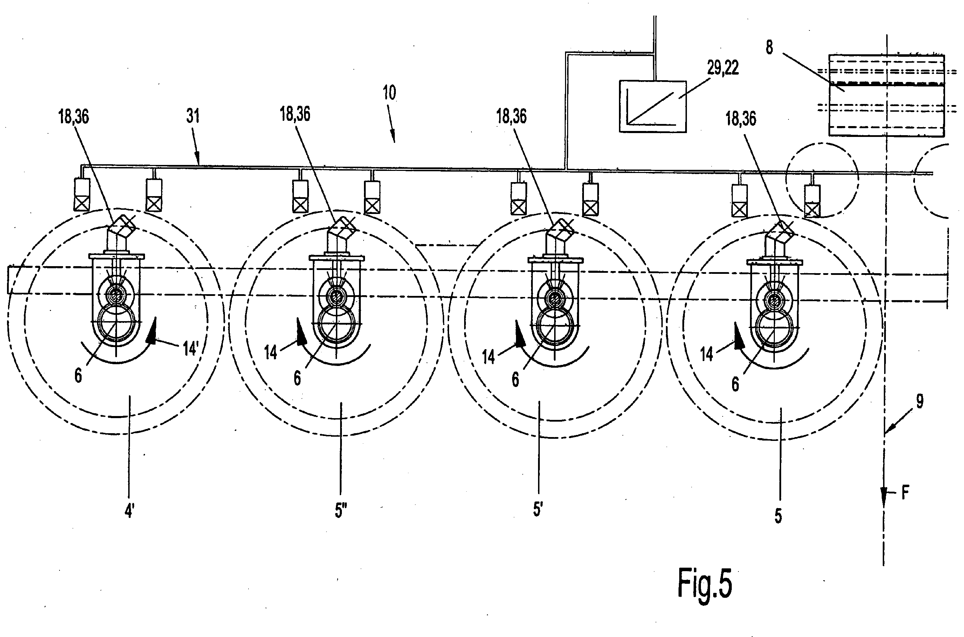

In Fig. 4 zeigte ebenfalls ein Vorsatzgerät 1 nach der Erfindung jedoch mit einem hydraulischen Antrieb der Mäh- und Förderelemente und in Fig.5 ein vergrößerter Ausschnitt des Vorsatzgerätes gemäß Fig.4 dargestellt. Fig. 6 zeigt dabei das komplette hydraulische Antriebssystem in einer vereinfachten Darstellung nach den Regeln hydraulischer Schaltpläne.

Wie in Fig. 4 dargestellt, kann erfindungsgemäß der Hauptantriebsstrang auch aus einer hydraulischen Welle als hydraulisches Antriebssystem 23 bestehen, so dass das Antriebselement 11 ein Hydraulikmotor 18 ist, welcher mit dem Antriebsmotor des Trägerfahrzeugs 2 über eine Hydraulikpumpe 19,19' in Antriebsverbindung steht. In dem dargestellten Ausführungsbeispiel ist eine load-sensing gesteuerte Doppelpumpe 37 dargestellt, welche aus zwei einzelnen Hydraulikpumpen 19',19" mit Druckabschneidung 25 als Überlastungssicherung 21 besteht, und die von der Zapfwelle des Trägerfahrzeugs 2 über den Antriebszapfen 34 eines Mittelgetriebes 34, ausgeführt als Zahnradvorgelege 39, angetrieben wird. Dabei können beide Hydraulikpumpen 19,19' separat angesteuert werden. Vorzugsweise handelt es sich dabei um Verstellpumpen in Schrägscheiben-Bauart für Mobilanwendungen im geschlossenen Kreislauf. Prinzipiell ist aber auch eine Anwendung im offenen Kreislauf möglich. In besonders vorteilhafterweise sind die Hydraulikpumpen 19,19' als Verstellpumpen mit Nulllage ausgebildet, so dass diese im Nullhub kein Fördervolumen liefern und auch in beide Förderichtungen durchgeschwenkt werden können, so dass der Förderstrom seine Flussrichtung umkehrt. Da beide Hydraulikpumpen unabhängig von einander angesteuert werden können, können auch die auf beiden Seiten links bzw. rechts der vertikalen Längsmittelebene 9 gelegenen Mäh- und Förderelemente des Vorsatzgerätes 1 separat und auch gruppenweise angesteuert und reversiert werden. In dem Ausführungsbeispiel in Fig. 6 ist das komplette hydraulische Antriebssystem 23 vereinfacht dargestellt, wobei jedem Mäh- und Förderelement 4,4',4',,5,5',5" noch ein separates Schaltelement als Betätigungseinrichtung (20) als 4-3- Wegesteuerventil mit Sperrstellung zugeordnet ist. Dadurch bedingt können die linke und die rechte Hälfte des Vorsatzgerätes nicht nur gruppenweise über die Pumpensteuerung mit Nullhubdurchgang angesteuert werden, d.h. wahlweise in Mähbetrieb, oder außer Betrieb oder in Reversierbetrieb gesetzt werden, sondern es ist ebenfalls möglich einzelne Mäh- und Förderelement 4,4',4',,5,5',5" selektiv mit den vorgenannte Betriebsbedingung anzusteuern. Dabei können auch benachbarte Mäh- und Förderelemente beim Reversieren außer Betrieb gesetzt werden.

Dabei ist jedem Antriebselement 11 als Hydraulikmotor 18 eine Überlastsicherung (21) zugeordnet, welche bei Überschreitung eines vorgegebenen Schwellwertes, der in Beziehung zu einem maximal vorgegebenen Antriebsdrehmoment steht, anspricht, und auch eine Stop-Funktion auslösen kann. Vorteilhafterweise sind die Wegeventile und die Überlastsicherung ausgebildet als Druckbegrenzungsventile (24) so ausgestaltet, dass sie in den Datenbus eingebunden sind und damit an den Ein- und Ausgängen des Jobrechners anliegen. Als Hydrauliktank (28) kann beispielsweise auch ein Hohlprofil des Maschinengestells 3 dienen.

Erfindungsgemäß ist jedem Antriebselement (11) der Mäh- und Förderscheiben wenigstens ein Drehzahlsensor 16 und ein Drehrichtungssensor 14,14' zugeordnet, so dass dessen generierte Messwerte auf einer Betätigungs- und Überwachungseinrichtung 32 visualisiert werden können.

Erfindungsgemäß ist jedem Antriebselement (11) einer Mäh- und Förderscheibe eine Schlupfmesseinrichtung (22) zugeordnet, welche bei Überschreitung eines Schwellwertes, der in Beziehung zu einer vorgegebenen Nenndrehzahl steht, eine Stop-Funktion auslöst oder auslösen kann.

Möglich ist auch, dass dabei die momentane Fahrgeschwindigkeit des Trägerfahrzeugs (2) mit der load-sensing Regelung im Sinne einer Leistungsaufnahmeregelung und/oder -begrenzung rückgekoppelt ist, wodurch die Fahrgeschwindigkeit sich dem Lastverhalten automatisch anpasst.

Der Jobrechner befindet sich dabei auf dem Vorsatzgerät 1 und er ist mittels eines Datenbusses 31, insbesondere über einen ISO-Bus, mit der zentralen Steuerung 30 des Trägerfahrzeugs verbunden und kann somit mit dieser kommunizieren.

Dadurch hat der Fahrer des Trägerfahrzeugs (2) die Möglichkeit, die Antriebselemente (11) über die zentrale Steuereinrichtung (30) wahlweise einzeln oder gruppenweise von seinem Fahrersitz aus anzusteuern.

### Bezugszeichenliste

- 1: Vorsatzgerät
- 2: Trägerfahrzeug (Erntemaschine, Feldhäcksler)
- 3: Maschinengestell
- 4,4',4": Mäh- und Förderelement (Mäh- und Fördertrommel)
- 5,5',5": Mäh- und Förderelement (Mäh- und Fördertrommel)
- 6,6': Hochachsen
- 7: Einzugsspalt
- 8: Einzugsgehäuse
- 9: vertikale Längsmittelebene
- 10: rückwärtiger Bereich
- 11: Antriebselement
- 12: Schaltgetriebe
- 13,13': Schaltkupplung
- 14: Drehrichtung im Urzeigersinn (rechtsdrehend)
- 14': Drehrichtung gegen Urzeigersinn (linksdrehend)
- 15: Hauptantriebsstrang
- 16: Drehzahlsensor
- 17: Drehrichtungssensor
- 18: Hydraulikmotor
- 19,19': Hydraulikpumpe
- 20: Betätigungseinrichtung
- 21: Überlastsicherung
- 22: Schlupfmesseinrichtung
- 23: hydraulisches Antriebssystem
- 24: Druckbegrenzungseinrichtung
- 25: Druckabschneidung
- 26: Steuerventil, Wegeventil
- 27: Steuereinrichtung
- 28: Hydrauliktank
- 29: Mikroprozessor
- 30: zentrale Steuereinrichtung des Trägerfahrzeugs
- 31: Datenbus
- 32: Betätigungs- und Überwachungseinrichtung
- 33: Führerstand
- 34: Mittelgetriebe
- 35: Antriebszapfen
- 36: Kegelstirnradgetriebe
- 37: Doppelpumpe
- 38: Mengenteiler
- 39: Zahnradvorgelege

- A: Arbeitsbreite
- F: Fahrt- und Arbeitsrichtung

## Patentansprüche

1. Vorsatzgerät (1) für landwirtschaftliche Erntemaschinen zum Mähen, Aufnehmen und Weiterführen eines stängelartigen Erntegutstroms in den Einzugsspalt (7) des Einzugsgehäuses (8) der weiterverarbeitenden Erntemaschine (2), mit wenigstens je zwei beidseitig der vertikalen Längsmittelebene (6,6') beabstandeten um Hochachsen (6,6;) umlaufend angetriebenen Mäh- und Förderelementen (4,5),(4',5'), **dadurch gekennzeichnet, dass** der Antrieb jedes einzelnen Mäh- und Förderelements unabhängig von den übrigen Mäh- und Förderelementen vom Führerstand aus der Kabine zu- oder abschaltbar oder reversierbar ist.

2. Vorsatzgerät (1) nach Anspruch 1, **dadurch gekennzeichnet, dass** die Schaltvorgänge von einer zentralen Steuereinheit des Trägerfahrzeugs nach einem oder mehreren vorwählbaren und hinterlegten Algorithmen erfolgen oder manuell vom Fahrer des Trägerfahrzeugs individuell und selektiv ausgelöst werden können.

3. Vorsatzgerät (1) nach Anspruch 1 und 2, **dadurch gekennzeichnet, dass** den Mäh- und Förderelementen (4;4',4",5,5',5") Antriebselemente (11,12) zugeordnet sind, durch deren Ansteuerung die Drehrichtungen (14,14') veränderbar sind.

4. Vorsatzgerät (1) nach Anspruch 3, **dadurch gekennzeichnet, dass** ein Antriebselement (11) ein Schaltgetriebe (12) ist.

5. Vorsatzgerät (1) nach Anspruch 3, **dadurch gekennzeichnet, dass** das Antriebselement (11) eine Schaltkupplung (13,13') ist.

6. Vorsatzgerät (1) nach Anspruch 3, **dadurch gekennzeichnet, dass** die Antriebselement (11,12,13,13') mit einem Hauptantriebsstrang (15), welcher mit dem Antriebsmotor des Trägerfahrzeugs (2) in Antriebsverbindung steht, kuppelbar sind.

7. Vorsatzgerät (1) nach Anspruch 3, **dadurch gekennzeichnet, dass** das Antriebselement (11) ein Hydraulikmotor (18) ist, welcher mit dem Antriebsmotor des Trägerfahrzeugs (2) in Antriebsverbindung steht.

8. Vorsatzgerät (1) nach Anspruch 3, **dadurch gekennzeichnet, dass** jedem Antriebselement (11) ein Schaltelement als Betätigungseinrichtung (20) zur Einschaltung, Ausschaltung und/oder zur Drehrichtungsumkehr zugeordnet ist.

9. Vorsatzgerät (1) nach Anspruch 3, **dadurch gekennzeichnet, dass** jedem Antriebselement (11) eine Überlastsicherung (21) zugeordnet ist, welche bei Überschreitung eines vorgegebenen Schwellwertes, der in Beziehung zu einem maximal vorgegebenen Antriebsdrehmoment steht, anspricht, und eine Stop-Funktion auslöst.

10. Vorsatzgerät (1) nach Anspruch 3, **dadurch gekennzeichnet, dass** jedem Antriebselement (11) wenigstens ein Drehzahlsensor (16) zugeordnet ist.

11. Vorsatzgerät (1) nach Anspruch 3, **dadurch gekennzeichnet, dass** jedem Antriebselement (11) wenigstens ein Drehrichtungssensor (17) zugeordnet ist.

12. Vorsatzgerät (1) nach Anspruch 3, **dadurch gekennzeichnet, dass** jedem Antriebselement (11) eine Schlupfmesseinrichtung (22) zugeordnet ist, welche bei Überschreitung eines Schwellwertes, der in Beziehung zu einer vorgegebenen Nenndrehzahl steht, eine Stop-Funktion auslöst.

13. Vorsatzgerät (1) nach Anspruch 4, **dadurch gekennzeichnet, dass** das Schaltgetriebe (12) wenigstens eine Schaltkupplung (13 oder 13') aufweist.

14. Vorsatzgerät (1) nach Anspruch 4, **dadurch gekennzeichnet, dass** das Schaltgetriebe (12) zwei Schaltkupplungen (13,13') aufweist.

15. Vorsatzgerät (1) nach Anspruch 5, **dadurch gekennzeichnet, dass** die Schaltkupplungen (13,13') eines Schaltgetriebes (12) derart in Wechselwirkung zueinander stehen, dass sie durch die Art Ihrer Beschaltung mit dem Hauptantriebsstrang (15) die Antriebsverbindung zu den Mäh- und Förderelementen (4;4',4",5,5',5") entweder schließen, öffnen oder reversieren.

16. Vorsatzgerät (1) nach Anspruch 5, **dadurch gekennzeichnet, dass** die Schaltkupplung(en) (13,13') Integraler Bestandteil des Schaltgetriebes (12) ist oder sind.

17. Vorsatzgerät (1) nach Anspruch 5, **dadurch gekennzeichnet, dass** eine Schaltkupplung (13,13') als Lamellenkupplung ausgebildet ist.

18. Vorsatzgerät (1) nach Anspruch 1 und 2, **dadurch gekennzeichnet, dass** das Vorsatzgerät (1) ein in sich geschlossenes hydraulisches Antriebssystem (23) zum Antrieb der Mäh- und Förderelemente (4;4',4",5,5',5") aufweist.

19. Vorsatzgerät (1) nach Anspruch 18, **dadurch gekennzeichnet, dass** das geschlossene hydraulische Antriebssystem (23) im Wesentlichen aus einer Pumpenstation (19), Hydraulikmotoren (18) mit den zugehörigen Steuerventilen (26), einer Druckbegrenzungseinrichtung (26) und einem Hydrauliktank (28) besteht, wobei der Antrieb der Hydraulikpumpe (19) mit dem Antriebsmotor des Trägerfahrzeugs (2) in Antriebsverbindung steht

20. Vorsatzgerät (1) nach Anspruch 18, **dadurch gekennzeichnet, dass** das hydraulische Antriebssystem (23) ein lastabhängig geregeltes load-sensing System ist.

21. Vorsatzgerät (1) nach Anspruch 18, **dadurch gekennzeichnet, dass** das hydraulische Antriebssystem (23) ein druckgeregeltes und/oder Förderstrom geregeltes load-sensing System ist.

22. Vorsatzgerät (1) nach Anspruch 18, **dadurch gekennzeichnet, dass** das hydraulische Antriebssystem (23) einen geschlossenen Hydraulikkreislauf aufweist.

23. Vorsatzgerät (1) nach Anspruch 18, **dadurch gekennzeichnet, dass** jedem Hydraulikmotor (18) eine Druckabschneidung (25) als Überlastsicherung (21) zugeordnet ist.

24. Vorsatzgerät (1) nach Anspruch 1 bis 23, **dadurch gekennzeichnet, dass** das Vorsatzgerät von einer zentralen Steuereinrichtung des Trägerfahrzeugs steuerbar ist.

25. Vorsatzgerät (1) nach einem der Ansprüche 1 bis 24, **dadurch gekennzeichnet, dass** das Vorsatzgerät (1) einen Jobrechner (29) aufnimmt.

26. Vorsatzgerät (1) nach Anspruch 24 und 25, **dadurch gekennzeichnet, dass** der Jobrechner (29) und die Betätigungs- und Überwachungseinrichtung (32) des Trägerfahrzeugs (2) über eine Daten-Busverbindung, insbesondere über einen ISO-Bus kommunizieren.

27. Vorsatzgerät (1) nach Anspruch 24 bis 26, **dadurch gekennzeichnet, dass** die Steuereinrichtung (27) und die zentrale Steuereinrichtung (30) des Trägerfahrzeugs (2) über eine Daten-Busverbindung (31) kommunizieren.

28. Vorsatzgerät (1) nach Anspruch 24 bis 27, **dadurch gekennzeichnet, dass** der Fahrer des Trägerfahrzeugs (2) die Antriebselemente (11) über die zentrale Steuereinrichtung (30) wahlweise einzeln oder gruppenweise ansteuern kann.

29. Vorsatzgerät (1) nach Anspruch 1 bis 30, **dadurch gekennzeichnet, dass** die selektive Ansteuerung die In- oder Außerbetriebsetzung oder Reversierung aller oder einzelner Antriebselemente (10) oder Gruppen davon ermöglicht.

30. Vorsatzgerät (1) nach Anspruch 18, **dadurch gekennzeichnet, dass** die momentane Fahrgeschwindigkeit des Trägerfahrzeugs (2) mit der load-sensing Regelung im Sinne einer Leistungsaufnahmebegrenzung rückgekoppelt ist.

31. Vorsatzgerät (1) nach Anspruch 1 bis 30, **dadurch gekennzeichnet, dass** das Vorsatzgerät ein Maisgebiss ist.

## Claims

1. A front-mounted implement (1) for agricultural harvesters for cutting, picking up and further conveying a stalk-like crop material flow into the intake gap (7) of the intake housing (8) of the harvester (2) for further processing, comprising at least two respective cutting and conveyor elements (4, 5), (4', 5') which are spaced on both sides of the vertical longitudinal central plane (9, 9') and which are driven in rotation about upright axes (6, 6'), **characterised in that** the drive of each individual cutting and conveyor element can be cut in or out or reversed independently of the other cutting and conveyor elements from the driving position of the cab.

2. A front-mounted implement (1) according to claim 1 **characterised in that** the shift operations are effected by a central control unit of the carrier vehicle in accordance with one or more preselectable and stored algorithms or can be individually and selectively triggered manually by the driver of the carrier vehicle.

3. A front-mounted implement (1) according to claim 1 and claim 2 **characterised in that** associated with the cutting and conveyor elements (4; 4', 4", 5, 5', 5") are drive elements (11, 12), by the actuation of which the directions of rotation (14, 14') can be changed.

4. A front-mounted implement (1) according to claim 3 **characterised in that** a drive element (11) is a shift transmission (12).

5. A front-mounted implement (1) according to claim 3 **characterised in that** the drive element (11) is a shift clutch (13, 13').

6. A front-mounted implement (1) according to claim 3 **characterised in that** the drive element (11, 12, 13, 13') can be coupled to a main drive train (15) drivingly connected to the drive engine of the carrier vehicle (2).

7. A front-mounted implement (1) according to claim 3 **characterised in that** the drive element (11) is a hydraulic motor (18) drivingly connected to the drive engine of the carrier vehicle (2).

8. A front-mounted implement (1) according to claim 3 **characterised in that** associated with each drive element (11) is a shift element as an actuating device (20) for cutting in, cutting out and/or reversing the direction of rotation.

9. A front-mounted implement (1) according to claim 3 **characterised in that** associated with each drive element (11) is an overload safeguard means (21) which responds when a predetermined threshold value related to a maximum predetermined drive torque is exceeded, and triggers a stop function.

10. A front-mounted implement (1) according to claim 3 **characterised in that** at least one rotary speed sensor (16) is associated with each drive element (11).

11. A front-mounted implement (1) according to claim 3 **characterised in that** at least one rotary direction sensor (17) is associated with each drive element (11).

12. A front-mounted implement (1) according to claim 3 **characterised in that** associated with each drive element (11) is a slip measuring device (22) which triggers a stop function when a threshold value related to a predetermined nominal rotary speed is exceeded.

13. A front-mounted implement (1) according to claim 4 **characterised in that** the shift transmission (12) has at least one shift clutch (13 or 13').

14. A front-mounted implement (1) according to claim 4 **characterised in that** the shift transmission (12) has two shift clutches (13, 13').

15. A front-mounted implement (1) according to claim 5 **characterised in that** the shift clutches (13, 13') of a shift transmission (12) are in mutually interacting relationship in such a way that they either close, open or reverse the drive connection to the cutting and conveyor elements (4; 4', 4", 5, 5', 5") by virtue of the nature of their connection to the main drive train (15).

16. A front-mounted implement (1) according to claim 5 **characterised in that** the shift clutch or clutches (13, 13') is or are an integral component of the shift transmission (12).

17. A front-mounted implement (1) according to claim 5 **characterised in that** a shift clutch (13, 13') is in the form of a multi-plate clutch.

18. A front-mounted implement (1) according to claim 1 or claim 2 **characterised in that** the front-mounted implement (2) has a hydraulic drive system (23) which is closed in itself for driving the cutting and conveyor elements (4; 4', 4", 5, 5', 5 ").

19. A front-mounted implement (1) according to claim 18 **characterised in that** the closed hydraulic drive system (23) substantially comprises a pump station (19), hydraulic motors (18) with the associated control valves (26), a pressure limiting device (26) and a hydraulic tank (28), the drive of the hydraulic pump (19) being drivingly connected to the drive engine of the carrier vehicle (2).

20. A front-mounted implement (1) according to claim 18 **characterised in that** the hydraulic drive system (23) is a load-sensing system regulated in load-dependent relationship.

21. A front-mounted implement (1) according to claim 18 **characterised in that** the hydraulic drive system (23) is a pressure-regulated and/or conveyor flow-regulated load-sensing system.

22. A front-mounted implement (1) according to claim 18 **characterised in that** the hydraulic drive system (23) has a closed hydraulic circuit.

23. A front-mounted implement (1) according to claim 18 **characterised in that** a pressure cut-off means (25) is associated as an overload safeguard means (21) with each hydraulic motor (18).

24. A front-mounted implement (1) according to claims 1 to 23 **characterised in that** the front-mounted implement is controllable by a central control device of the carrier vehicle.

25. A front-mounted implement (1) according to one of claims 1 to 24 **characterised in that** the front-mounted implement (1) accommodates a job computer (29).

26. A front-mounted implement (1) according to claims 24 and 25 **characterised in that** the job computer (29) and the actuating and monitoring device (32) of the carrier vehicle (2) communicate by way of a data bus connection, in particular by way of an ISO bus.

27. A front-mounted implement (1) according to claims 24 to 26 **characterised in that** the control device (27) and the central control device (30) of the carrier vehicle (2) communicate by way of a data bus connection (31).

28. A front-mounted implement (1) according to claims 24 to 27 **characterised in that** the driver of the carrier vehicle (2) can actuate the drive elements (11) selectively individually or group-wise by way of the central control device (30).

29. A front-mounted implement (1) according to claims 1 to 30 **characterised in that** selective actuation permits all or individual drive elements (10) or groups thereof to be brought into or out of operation or reversed.

30. A front-mounted implement (1) according to claim 18 **characterised in that** the instantaneous speed of travel of the carrier vehicle (2) is fed back to the load-sensing regulation to provide a power consumption limitation.

31. A front-mounted implement (1) according to claims 1 to 30 **characterised in that** the front-mounted implement is a corn cutter tooth arrangement.

## Revendications

1. Outil frontal (1) pour machines agricoles de récolte servant à faucher, ramasser et transférer un flux de produit de récolte en tiges dans la fente d'alimentation (7) du carter d'alimentation (8) de la machine de récolte (2) pour son traitement ultérieur, avec au moins deux éléments de coupe et de transport (4, 5), (4', 5') espacés chaque fois des deux côtés du plan médian longitudinal vertical (6, 6') et entraînés en rotation autour d'axes verticaux (6, 6'), **caractérisé en ce que** l'entraînement de chaque élément de coupe et de transport peut être activé, désactivé ou inversé indépendamment des autres éléments de coupe et de transport depuis le poste de conduite dans la cabine.

2. Outil frontal (1) selon la revendication 1, **caractérisé en ce que** les opérations de commutation sont effectuées par un dispositif central de commande du véhicule porteur selon un ou plusieurs algorithmes mémorisés et présélectionnables ou peuvent être déclenchées manuellement par le conducteur du véhicule porteur de manière individuelle et sélective.

3. Outil frontal (1) selon les revendications 1 et 2, **caractérisé en ce qu'**aux éléments de coupe et de transport (4 ; 4', 4", 5, 5', 5") sont associés des éléments d'entraînement (11, 12) dont la commande permet de changer les sens de rotation (14, 14').

4. Outil frontal (1) selon la revendication 3, **caractérisé en ce qu'**un élément d'entraînement (11) est un mécanisme de transmission (12).

5. Outil frontal (1) selon la revendication 3, **caractérisé en ce que** l'élément d'entraînement (11) est un embrayage (13, 13').

6. Outil frontal (1) selon la revendication 3, **caractérisé en ce que** l'élément d'entraînement (11, 12, 13, 13') peut être couplé à une ligne de transmission principale (15) qui est en liaison d'entraînement avec le moteur d'entraînement du véhicule porteur (2).

7. Outil frontal (1) selon la revendication 3, **caractérisé en ce que** l'élément d'entraînement (11) est un moteur hydraulique (18) qui est en liaison d'entraînement avec le moteur d'entraînement du véhicule porteur (2).

8. Outil frontal (1) selon la revendication 3, **caractérisé en ce qu'**à chaque élément d'entraînement (11) est associé un élément de commutation comme dispositif de manoeuvre (20) pour l'activation, la désactivation et/ou l'inversion du sens de rotation.

9. Outil frontal (1) selon la revendication 3, **caractérisé en ce qu'**à chaque élément d'entraînement (11) est associée une protection anti-surcharge (21) qui, en cas de dépassement d'une valeur seuil prédéterminée en relation avec un couple d'entraînement maximal prédéfini, réagit et déclenche une fonction d'arrêt.

10. Outil frontal (1) selon la revendication 3, **caractérisé en ce qu'**au moins un capteur de vitesse de rotation (16) est associé à chaque élément d'entraînement (11).

11. Outil frontal (1) selon la revendication 3, **caractérisé en ce qu'**au moins un capteur de sens de rotation (17) est associé à chaque élément d'entraînement (11).

12. Outil frontal (1) selon la revendication 3, **caractérisé en ce qu'**à chaque élément d'entraînement (11) est associé un dispositif de mesure de glissement (22) qui déclenche une fonction d'arrêt en cas de dépassement d'une valeur seuil en relation avec une vitesse de rotation nominale prédéterminée.

13. Outil frontal (1) selon la revendication 4, **caractérisé en ce que** le mécanisme de transmission (12) comporte au moins un embrayage (13 ou 13').

14. Outil frontal (1) selon la revendication 4, **caractérisé en ce que** le mécanisme de transmission (12) comporte deux embrayages (13, 13').

15. Outil frontal (1) selon la revendication 5, **caractérisé en ce que** les embrayages (13, 13') d'un mécanisme de transmission (12) sont en interaction mutuelle de telle sorte qu'ils ferment, ouvrent ou inversent la liaison d'entraînement avec les éléments de coupe et de transport (4 ; 4', 4", 5, 5', 5") selon la manière dont ils sont raccordés à la ligne de transmission principale (15).

16. Outil frontal (1) selon la revendication 5, **caractérisé en ce que** le ou les embrayage(s) (13, 13') fait ou font partie intégrante du mécanisme de transmission (12).

17. Outil frontal (1) selon la revendication 5, **caractérisé en ce qu'**un embrayage (13, 13') est réalisé sous la forme d'un embrayage multidisques.

18. Outil frontal (1) selon les revendications 1 et 2, **caractérisé en ce que** l'outil frontal (1) comporte un système d'entraînement hydraulique (23) indépendant pour l'entraînement des disques de coupe et de transport (4 ; 4', 4", 5, 5', 5").

19. Outil frontal (1) selon la revendication 18, **caractérisé en ce que** le système d'entraînement hydraulique (23) indépendant se compose essentiellement d'une station de pompage (19), de moteurs hydrauliques (18) avec les vannes de commande (26) associées, d'un dispositif de limitation de pression (26) et d'un réservoir hydraulique (28), l'entraînement de la pompe hydraulique (19) étant en liaison d'entraînement avec le moteur d'entraînement du véhicule porteur (2).

20. Outil frontal (1) selon la revendication 18, **caractérisé en ce que** le système d'entraînement hydraulique (23) est un système « load sensing » régulé en fonction de la charge.

21. Outil frontal (1) selon la revendication 18, **caractérisé en ce que** le système d'entraînement hydraulique (23) est un système « load sensing » régulé en pression et/ou en débit.

22. Outil frontal (1) selon la revendication 18, **caractérisé en ce que** le système d'entraînement hydraulique (23) est un circuit hydraulique fermé.

23. Outil frontal (1) selon la revendication 18, **caractérisé en ce qu'**à chaque moteur hydraulique (18) est associée un moyen de coupure de pression (25) comme protection anti-surcharge (21).

24. Outil frontal (1) selon les revendications 1 à 23, **caractérisé en ce que** l'outil frontal peut être commandé par un dispositif central de commande du véhicule porteur.

25. Outil frontal (1) selon une des revendications 1 à 24, **caractérisé en ce que** l'outil frontal (1) contient un ordinateur de travail (29).

26. Outil frontal (1) selon les revendications 24 et 25, **caractérisé en ce que** l'ordinateur de travail (29) et le dispositif de manoeuvre et de surveillance (32) du véhicule porteur (2) communiquent par l'intermédiaire d'une liaison de bus de données, en particulier par l'intermédiaire d'un bus ISO.

27. Outil frontal (1) selon les revendications 24 à 26, **caractérisé en ce que** le dispositif de commande (27) et le dispositif central de commande (30) du véhicule porteur (2) communiquent par l'intermédiaire d'une liaison de bus de données (31).

28. Outil frontal (1) selon les revendications 24 à 27, **caractérisé en ce que** le conducteur du véhicule porteur (2) peut commander les éléments d'entraînement (11) au choix individuellement ou par groupes par l'intermédiaire du dispositif central de commande (30).

29. Outil frontal (1) selon les revendications 1 à 30, **caractérisé en ce que** la commande sélective permet la mise en ou hors service ou l'inversion du sens de rotation de tous les éléments d'entraînement (10) ou groupes ou de certains d'entre eux.

30. Outil frontal (1) selon la revendication 18, **caractérisé en ce que** la vitesse de marche momentanée du véhicule porteur (2) est réinjectée dans la régulation « load sensing » dans le but de limiter la consommation de puissance.

31. Outil frontal (1) selon la revendication 1 à 30, **caractérisé en ce que** l'outil frontal est un bec cueilleur de maïs.
